# EUROPEAN PATENT APPLICATION

(11) **EP 4 621 108 A1**
(43) Date of publication of application: **24.09.2025**
(21) Application number: 25157552.8
(22) Date of filing: 13.02.2025
(51) Int. Cl.: C25B 15/02

(54) **STATE DIAGNOSIS SYSTEM, STATE DIAGNOSIS METHOD, AND ELECTROLYSIS SYSTEM**

(30) Priority: 21.03.2024 JP 2024044683
(71) Applicant: Kabushiki Kaisha Toshiba, Tokyo 105-0023 (JP)
(72) Inventor: YAMAGIWA, Masakazu, Minato-ku, Tokyo 105-0023 (JP); FUJIWARA, Naoya, Minato-ku, Tokyo 105-0023 (JP); KUDO, Yuki, Minato-ku, Tokyo 105-0023 (JP); KITAGAWA, Ryota, Minato-ku, Tokyo 105-0023 (JP)
(74) Representative: Hoffmann Eitle

(57) **Abstract**

A diagnosis system of an electrolysis device, includes: a device to output an impedance data indicating a measurement result of a complex impedance; a first memory unit to store prior data including a relation data indicating a relation between state of the device and a diagnosis result of a state of the device; a first processing unit to analyze the impedance data, judge validity of an analysis result, and output an analysis data indicating the analysis result in which data indicating at least a part of a frequency region of the measurement result is determined valid; a second processing unit to output a state data indicating the state based on first data including the analysis data; a second memory unit to store second data including the state data; and a third processing unit to output a diagnosis data based on data including the prior data and the second data.

## Description

### FIELD

Arrangements relate to a state diagnosis system, a state diagnosis method, and an electrolysis system.

### BACKGROUND

In recent years, from both viewpoints of an energy problem and an environmental problem, it is desired not only to convert renewable energy of solar power generation or the like into electric energy and use it but also to store that energy and convert it into a conveyable state. In response to this request, research and development of an artificial photosynthesis technology of producing a chemical substance by using sunlight such as in photosynthesis by plants is in progress. Such a technology brings about a possibility of storing renewable energy as a storable fuel, and it is also expected to create value by producing a chemical substance used as an industrial raw material.

As a device which produces the chemical substance by using the renewable energy of solar power generation or the like, there is known, for example, an electrolysis device (electrochemical reaction device) such as a carbon dioxide electrolysis device which has a cathode that reduces carbon dioxide (CO₂) generated from a power plant, a waste treatment plant, or the like and an anode that oxidizes water (H₂O). The cathode reduces carbon dioxide to produce a carbon compound such as carbon monoxide (CO), for example. In realizing such an electrolysis device by a cell form (also referred to as an electrolysis cell), it is considered effective to realize the electrolysis device, for example, by a form similar to a fuel cell such as a Polymer Electric Fuel Cell (PEFC). Direct supply of carbon dioxide to a catalyst layer of the cathode enables rapid progress of a reduction reaction of carbon dioxide. Further, formation of a cell stack by stacking electrolysis cells enables efficient progress of the reduction reaction in a saved space.

### RELEVANT REFERENCES

### Patent Reference

Reference 1: Hugh Warkentin. et. al, "Early Warning for the Electrolyzer: Monitoring CO2 Reduction via In-Line Electrochemical Impedance Spectroscopy", Chemistry-Sustainability-Energy-Materials 2023, e202300657

### BRIEF DESCRIPTION OF THE DRAWINGS

FIG. 1 is a schematic view illustrating an example configuration of a state diagnosis system and an electrolysis system of a first arrangement.
FIG. 2 is a schematic view illustrating a first example configuration of an electrolysis device 10.
FIG. 3 is a schematic view illustrating a second example configuration of the electrolysis device 10.
FIG. 4 is a flowchart illustrating an example of an analysis processing by a processing unit 31.
FIG. 5 is a view illustrating an example of a complex impedance measurement result of the electrolysis device 10.
FIG. 6 is a schematic view illustrating a graph of a Lin-KK test result.
FIG. 7 is an example of a result in the case where a spectrum of a frequency region (1000 Hz or lower) in which a residual is ±5% is extracted and subjected to DRT analysis.
FIG. 8 is a schematic view illustrating an example of a result in the case where a spectrum of a frequency region (500 Hz or lower) in which a residual is ±3% is extracted and analyzed.
FIG. 9 is a view illustrating another example of the complex impedance measurement result of the electrolysis device 10.
FIG. 10 is a schematic view illustrating an example configuration of a state diagnosis system and an electrolysis system of a second arrangement.
FIG. 11 is a schematic view illustrating an example configuration of a state diagnosis system and an electrolysis system of a third arrangement.

### DETAILED DESCRIPTION

A state diagnosis system of an arrangement is a state diagnosis system configured to diagnose a state of an electrolysis device. The electrolysis device includes an electrolysis cell, the electrolysis cell having an anode, a cathode, and a separator separating the anode and the cathode. The state diagnosis system includes: an impedance measuring device configured to measure a complex impedance of the electrolysis device and to output an impedance data indicating a measurement result of the complex impedance; a first memory unit configured to store at least one prior information data to be obtained before start of an operation of the electrolysis device, the at least one prior information data including a relation data indicating a relation between state information of the electrolysis device and a diagnosis result of a state of the electrolysis device; a first processing unit configured to analyze the impedance data, judge a validity of an analysis result of the impedance data, and output an analysis data indicating the analysis result in which a data indicating at least a part of a frequency region in the measurement result is determined valid; a second processing unit configured to output state data indicating the state information based on at least one first data, the at least one first data including the analysis data; a second memory unit configured to store at least one second data, the at least one second data including the state data; and a third processing unit configured to diagnose the state based on multiple data including the at least one prior information data from the first memory unit and the at least one second data from the second memory unit, and to output a diagnosis data indicating the diagnosis result of the state.

Hereinafter, electrolysis devices of arrangements will be described with reference to the drawings. In each arrangement described below, substantially the same components are denoted by the same reference signs and explanation thereof will be partially omitted in some cases. The drawings are schematic, in which a relationship between a thickness and a planar dimension, a thickness ratio among components, and so on may be different from actual ones.

In this specification, "connecting" includes not only connecting directly but also connecting indirectly unless otherwise specified. Further, in this specification, "connecting" includes not only connecting physically but also connecting electrically unless otherwise specified.

### (First Arrangement)

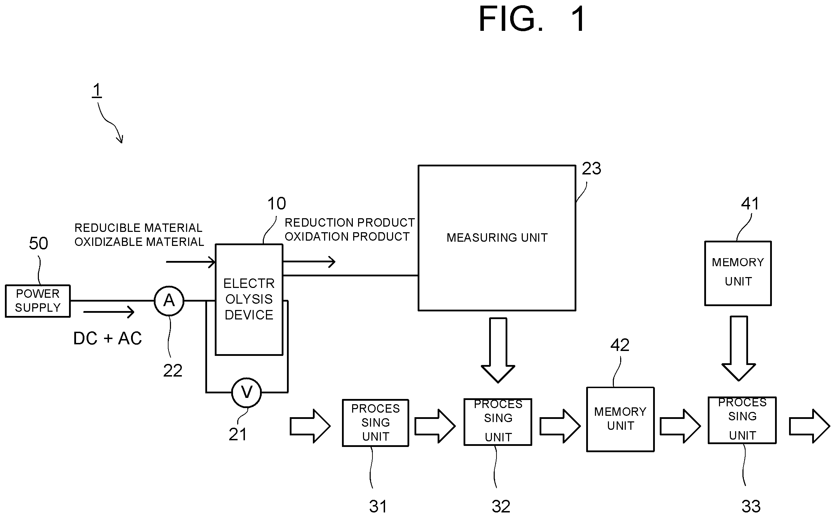

FIG. 1 is a schematic view illustrating an example configuration of a state diagnosis system and an electrolysis system of a first arrangement. FIG. 1 illustrates an example configuration of an electrolysis system 1. The electrolysis system 1 has an electrolysis device 10, a measuring unit 23, an impedance measuring device 21, an ammeter 22, a processing unit 31, a processing unit 32, a processing unit 33, a memory unit 41, and a memory unit 42. Components of the electrolysis system 1 except the electrolysis device 10 can constitute a state diagnosis system of the electrolysis device 10. Examples of the state diagnosis system include a deterioration diagnosis system of the electrolysis device 10, and so on.

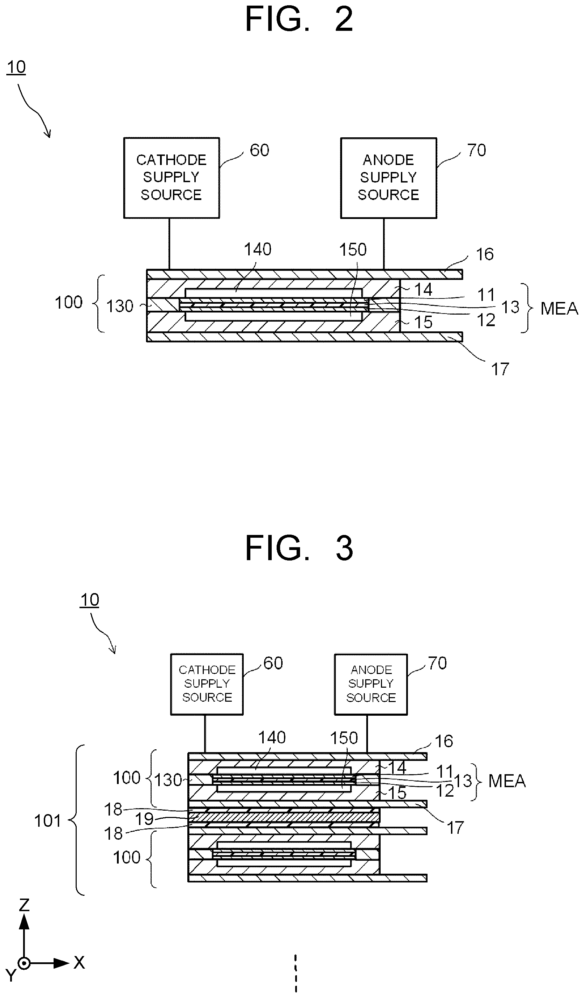

FIG. 2 is a schematic view illustrating a first example configuration of the electrolysis device 10. The electrolysis device 10 has an electrolysis cell 100. The electrolysis cell 100 has a cathode 11, an anode 12, a separator 13, a cathode flow path plate 14 having a cathode flow path 140, and an anode flow path plate 15 having an anode flow path 150. The cathode 11, the anode 12, and the separator 13 may be stacked to form a membrane electrode assembly MEA. The membrane electrode assembly MEA may be supported by a support plate 130. The support plate 130 is preferably formed using an insulating material, for example.

FIG. 3 is a schematic view illustrating a second example configuration of the electrolysis device 10. The electrolysis device 10 may have the electrolysis cells 100 as illustrated in FIG. 3. The electrolysis cells 100 are stacked, for example, with an insulating layer 18 interposed therebetween to form an electrolysis cell structure 101 such as a cell stack. The stacked electrolysis cells 100 may be sandwiched between a pair of support plates and further fastened with a bolt or the like. FIG. 3 illustrates two electrolysis cells 100, but it suffices that the number of the electrolysis cells 100 is two or more and the number is not limited to the number illustrated in FIG. 3.

The cathode 11 is an electrode (reduction electrode) for causing a reduction reaction of at least one reducible material (material to be reduced) to produce at least one reduction product, for example. The cathode 11 is in contact with the separator 13. Examples of the at least one reducible material include carbon dioxide, nitrogen, hydrogen, oxygen, a reduction product, and so on. Examples of the at least one reduction product include a carbon compound, ammonia, and so on. Examples of the carbon compound include carbon monoxide (CO), methane (CH₄), ethane (C₂H₆), and so on. The reduction reaction at the cathode 11 may include a side reaction of causing a reduction reaction of water to produce hydrogen (H₂). Further, the reduction reaction at the cathode 11 may include not only the reduction reaction of carbon dioxide but also a side reaction of causing a reduction reaction of oxygen to produce water (H₂O).

The cathode 11 is supplied with a cathode fluid from the cathode flow path 140 and supplied with an anode fluid and ions from the separator 13. The cathode fluid includes a gas of the reducible material. The cathode 11 may have a gas diffusion layer and a cathode catalyst layer provided on the gas diffusion layer. The cathode 11 may further have a porous layer which is denser than the gas diffusion layer between the gas diffusion layer and the cathode catalyst layer. The gas diffusion layer is arranged on the cathode flow path 140 side, and the cathode catalyst layer is arranged on the separator 13 side. The cathode catalyst layer may intrude into the gas diffusion layer. The cathode catalyst layer preferably has a catalyst nanoparticle, a catalyst nanostructure, or the like. The gas diffusion layer is constituted by carbon paper, carbon cloth, or the like, for example, and may have been subjected to a water repellent treatment. The porous layer is constituted by a porous body smaller in pore size than the carbon paper or the carbon cloth.

Performing an appropriate water repellent treatment to the gas diffusion layer allows a carbon dioxide gas to reach the cathode catalyst layer mainly by gas diffusion. The reduction reaction of carbon dioxide and the reduction reaction of a carbon compound produced thereby occur near the boundary between the gas diffusion layer and the cathode catalyst layer or near the cathode catalyst layer intruding into the gas diffusion layer.

The cathode catalyst layer preferably contains a catalyst material (cathode catalyst material) capable of decreasing an overvoltage of the aforementioned reduction reaction. Examples of such a material include metals such as gold (Au), silver (Ag), copper (Cu), platinum (Pt), palladium (Pd), nickel (Ni), cobalt (Co), iron (Fe), manganese (Mn), titanium (Ti), cadmium (Cd), zinc (Zn), indium (In), gallium (Ga), lead (Pb), and tin (Sn), metal materials such as alloys and intermetallic compounds containing at least one of those metals, carbon materials such as carbon (C), graphene, CNT (carbon nanotube), fullerene, and ketjen black, and metal complexes such as a Ru complex and a Re complex. To the cathode catalyst layer, various shapes such as a plate shape, a mesh shape, a wire shape, a particle shape, a porous shape, a thin film shape, or an island shape can be applied.

The cathode catalyst material constituting the cathode catalyst layer preferably has a nanoparticle of the aforementioned metal material, a nanostructure of the metal material, a nanowire of the metal material, or a composite body in which the nanoparticle of the aforementioned metal material is supported by a carbon material such as carbon particle, carbon nanotube, or graphene. The use of the catalyst nanoparticle, the catalyst nanostructure, a catalyst nanowire, a catalyst nanosupport structure, or the like, as the cathode catalyst material can enhance a reaction efficiency of the reduction reaction of carbon dioxide at the cathode 11.

The anode 12 is an electrode (oxidation electrode) for causing an oxidation reaction of at least one oxidizable material (substance to be oxidized) to produce at least one oxidation product, for example. Examples of the at least one oxidizable material include water. Examples of the at least one oxidation product include oxygen, and hydrogen ions. The oxidation reaction by the anode 12 oxidizes water (H₂O) in an anode solution contained in the anode fluid to produce oxygen (O₂) and hydrogen ions (H⁺), for example, or may oxidize hydroxide ions (OH⁻) produced by the reduction reaction of carbon dioxide at the cathode 11 to produce oxygen and water. The anode 12 is provided between the separator 13 and the anode flow path 150 and is in contact with them.

The anode 12 preferably contains a catalyst material (anode catalyst material) capable of decreasing an overvoltage of the aforementioned oxidation reaction. Examples of the catalyst material include metals such as platinum (Pt), palladium (Pd), and nickel (Ni), alloys and intermetallic compounds containing those metals, binary metal oxides such as manganese oxide (Mn-O), iridium oxide (Ir-O), nickel oxide (Ni-O), cobalt oxide (CoO), iron oxide (Fe-O), tin oxide (Sn-O), indium oxide (In-O), ruthenium oxide (Ru-O), lithium oxide (Li-O), and lanthanum oxide (La-O), ternary metal oxides such as Ni-Co-O, Ni-Fe-O, La-Co-O, Ni-La-O, and Sr-Fe-O, quaternary metal oxides such as Pb-Ru-Ir-O and La-Sr-Co-O, and metal complexes such as a Ru complex and a Fe complex.

The anode 12 includes a base material having a structure capable of moving liquid and ions between the separator 13 and the anode flow path 150, for example, a porous structure such as a mesh material, a punched material, a porous body, or a metal fiber sintered compact. The base material may be constituted by a metal such as titanium (Ti), nickel (Ni), or iron (Fe) or a metal material such as an alloy (for example SUS) containing at least one of the metals, or may be constituted by the aforementioned anode catalyst material. In the case of using an oxide as the anode catalyst material, it is preferable to bond or stack the anode catalyst material on a surface of the base material constituted by the above metal material to form a catalyst layer. The anode catalyst material preferably has a nanoparticle, a nanostructure, a nanowire, or the like in order to enhance the oxidation reaction. The nanostructure is a structure obtained by forming nanoscale irregularities on a surface of the catalyst material. The oxidation catalyst does not always need to be provided at the anode 12. An oxidation catalyst layer provided other than at the anode 12 may be electrically connected to the anode 12.

The separator 13 is provided between the cathode 11 and the anode 12. The separator 13 is arranged in a manner to separate the cathode 11 and the anode 12 from each other. The separator 13 includes an ion exchange membrane capable of moving ions between the cathode 11 and the anode 12 and separating the cathode 11 and the anode 12 from each other. Examples of the usable ion exchange membrane include a cation exchange membrane such as Nafion or Flemion, and an anion exchange membrane such as Neosepta, Selemion, or Sustainion. In the case of assuming the movement of mainly OH⁻by using an alkaline solution for an electrolytic solution, the separator 13 is preferably constituted by an anion exchange membrane. Besides, the ion exchange membrane may be constituted by using a film using hydrocarbon as a basic structure or a film having an amine group. However, other than the ion exchange membrane, a salt bridge, a glass filter, a porous polymer membrane, a porous insulating material, or the like, as long as it is a material capable of moving ions between the cathode 11 and the anode 12, may be applied to the separator 13. However, if passage of gas occurs between the cathode 11 and the anode 12, a circular reaction due to reoxidation of the reduction product may occur. Therefore, it is preferable that there is less exchange of gas between the cathode 11 and the anode 12. Therefore, it is necessary to take care when using a thin film of a porous body as the separator 13.

The cathode flow path plate 14 has the cathode flow path 140. The cathode flow path 140 faces the cathode 11. Through the cathode flow path 140, the cathode fluid to be supplied to the cathode 11 and containing the reducible material can flow. The cathode fluid may contain water vapor by humidification. The reduction product is mainly discharged from the cathode flow path 140 while being contained in the cathode fluid. The kind of the reduction product is different depending on the kind of the reduction catalyst or the like. Together with the gas products, vapor or moisture obtained by dew condensation of vapor contained in the humidified carbon dioxide gas is discharged from the cathode flow path 140. In the electrolysis cell structure 101, in the case where a space (for example, through hole such as via) through which the cathode fluid flows is connected in series between the electrolysis cells 100, the cathode fluid discharged from one cathode flow path of the electrolysis cells 100 may be introduced directly to an inlet of the cathode flow path 140 of the adjacent electrolysis cell.

The kind of the reduction product is different also depending on a composition of the cathode fluid. In the case where the cathode fluid contains a carbon dioxide gas or a humidified carbon dioxide gas, a carbon monoxide gas and a reduction product such as hydrogen as a by-product are mainly produced. In the case where the cathode fluid contains a nitrogen gas, a reduction product such as ammonia is mainly produced. In the case where the cathode fluid contains an impurity gas such as oxygen, oxygen is reduced to produce water as a reduction product.

The cathode flow path 140 is provided on a surface of the cathode flow path plate 14. The cathode flow path plate 14 has a groove (recessed portion) which forms the cathode flow path 140 on the surface. The cathode flow path plate 14 is preferably formed using a material low in chemical reactivity and high in conductivity. Examples of the material include metal materials such as titanium (Ti) and SUS, carbon, and so on. Examples of the material of the flow path plate include a material low in chemical reactivity and having no conductivity. Examples of the material include insulating resin materials such as an acrylic resin, polyether ether ketone (PEEK), and a fluorocarbon resin. Note that the cathode flow path plate 14 has a screw hole for fastening. Further, before and after each cathode flow path plate 14, packing may be sandwiched as necessary. Note that the cathode flow path 140 may be provided in the cathode current collector 16.

The cathode flow path 140 has the inlet and an outlet, is supplied with the cathode fluid from a cathode supply source 60 through the inlet, and discharges the cathode fluid containing the reduction product through the outlet. The cathode fluid flows through the inside of the cathode flow path 140 in a manner to be in contact with the cathode 11. The cathode fluid discharged from the cathode flow path 140 may contain an unreacted reducible material or the like.

The cathode flow path 140 may have a land in contact with the cathode 11 for electrical connection with the cathode 11. A shape of the cathode flow path 140 is not particularly limited as long as it continues without a break, and can be, for example, a serpentine structure obtained by folding an elongated flow path or the like. Thus, it is preferable that the cathode fluid uniformly flows on the surface of the cathode 11, thereby allowing a uniform reaction to be performed at the cathode 11.

The cathode fluid may be supplied in a dry state. In the case where the cathode fluid contains a carbon dioxide gas, a carbon dioxide concentration of the cathode fluid to be supplied from the cathode supply source 60 to the cathode flow path 140 does not have to be 100%. It is also possible to use a fluid containing the carbon dioxide gas discharged from various facilities, as the cathode fluid. In this case, the cathode fluid may contain an impurity gas. Assuming that a first gas contained in the cathode fluid is the carbon dioxide gas, a second gas contained in the cathode fluid is a substance different from carbon dioxide, such as, for example, oxygen or nitrogen. A concentration of the second gas is preferably lower than a concentration of the first gas and is, for example, 1 ppm or higher and 100000 ppm or lower.

The cathode flow path plate 14 can be mainly formed of one member, but may be formed of a plurality of different members and constructed by stacking them. Further, a surface treatment may be performed partially or entirely on the cathode flow path plate 14 to add a hydrophilic or water repellent function to the cathode flow path plate 14.

The anode flow path plate 15 has the anode flow path 150. The anode flow path 150 faces the anode 12. Through the anode flow path 150, the anode fluid to be supplied to the anode 12 can flow. The anode fluid contains liquid such as, for example, the anode solution.

The anode solution preferably contains at least water (H₂O). For example, in the case where the reducible material is carbon dioxide, carbon dioxide is supplied from the cathode flow path 140, so that the anode solution may or may not contain carbon dioxide.

As the anode solution, an aqueous solution (electrolytic solution) containing metal ions can be used. Examples of the aqueous solution include aqueous solutions containing phosphate ion (PO₄²⁻), borate ion (BO₃³⁻), sodium ion (Na⁺), potassium ion (K⁺), calcium ion (Ca²⁺), lithium ion (Li⁺), cesium ion (Cs⁺), magnesium ion (Mg²⁺), chloride ion (Cl⁻), hydrogen carbonate ion (HCO₃⁻), and so on. In addition, aqueous solutions containing lithium hydrogen carbonate (LiHCO₃), sodium hydrogen carbonate (NaHCO₃), potassium hydrogen carbonate (KHCO₃), cesium hydrogen carbonate (CsHCO₃), phosphoric acid, boric acid, and so on may be used.

The anode flow path 150 is provided on a surface of the anode flow path plate 15. The anode flow path plate 15 is for supplying the anode fluid to the anode 12, and has a groove (recessed portion) which forms the anode flow path 150 on the surface. The anode flow path plate 15 is preferably formed using a material low in chemical reactivity and high in conductivity. Examples of the material include metal materials such as Ti and SUS, carbon, and so on. Note that the anode flow path 150 may be provided in the anode current collector 17. Further, examples of the material of the anode flow path plate 15 include a material low in chemical reactivity and having no conductivity. Examples of the material include insulating resin materials such as an acrylic resin, polyether ether ketone (PEEK), and a fluorocarbon resin. Note that the anode flow path plate 15 has a not-illustrated screw hole for fastening.

The anode flow path plate 15 is mainly formed of one member, but may be formed of a plurality of different members and constructed by stacking them. Further, a surface treatment may be performed partially or entirely on the anode flow path plate 15 to add a hydrophilic or water repellent function to the anode flow path plate 15.

The anode flow path 150 has an inlet and an outlet, is supplied with the anode fluid from an anode supply source 70 through the inlet, and discharges the anode fluid through the outlet. The anode fluid flows through the inside of the anode flow path 150 in a manner to be in contact with the anode 12. The anode fluid discharged from the anode flow path 150 may contain an unreacted oxidizable material and an electrolytic solution, an oxidation product, and so on.

The anode flow path plate 15 may have a land in contact with the anode 12 for electrical connection with the anode 12. A shape of the anode flow path 150 is not particularly limited as long as it continues without a break, and can be, for example, a serpentine structure obtained by folding an elongated flow path or the like. Thus, it is preferable that the anode fluid uniformly flows on the surface of the anode 12, thereby allowing a uniform reaction to be performed at the anode 12.

The cathode current collector 16 is electrically connected to the cathode 11. The cathode current collector 16 is in contact with a surface of the cathode flow path plate 14 opposite to the cathode flow path 140. The cathode current collector 16 preferably contains a material low in chemical reactivity and high in conductivity. Examples of the material include metal materials such as Ti and SUS, carbon, and so on.

The anode current collector 17 is electrically connected to the anode 12. The anode current collector 17 is in contact with a surface of the anode flow path plate 15 opposite to the anode flow path 150. The anode current collector 17 preferably contains a material low in chemical reactivity and high in conductivity. Examples of the material include metal materials such as Ti and SUS, carbon, and so on.

The insulating layer 18 is provided between two electrolysis cells 100. The insulating layer 18 is formed using a material such as a material coated with a fluorocarbon resin such as silicone or polytetrafluoroethylene (PTFE), an insulating resin material such as an acrylic resin, polyether ether ketone (PEEK), or a fluorocarbon resin, or the like, for example. The electrolysis device 10 may have a plurality of insulating layers 18.

The electrolysis device 10 may have a reference electrode 19 as illustrated in FIG. 3. The reference electrode 19 is arranged, for example, between the electrolysis cells 100. The reference electrode 19 may be provided between the plurality of insulating layers 18 as illustrated in FIG. 3. The reference electrode 19 may be connected to the impedance measuring device 21 via a wire, for example. The reference electrode 19 can be formed using, for example, a material applicable to the cathode current collector 16 or the anode current collector 17. The electrolysis device 10 does not need to have the reference electrode 19.

The electrolysis cell 100 may be connected to the cathode supply source 60. The cathode supply source 60 can supply the cathode fluid to the electrolysis cell 100, for example. The cathode supply source 60 is connected to the inlet of the cathode flow path 140 of the electrolysis cell 100 via, for example, a pipe. The cathode supply source 60 is provided inside or outside the state diagnosis system or the electrolysis system 1.

The electrolysis cell 100 may be connected to the anode supply source 70. The anode supply source 70 can supply the anode fluid to the electrolysis cell 100, for example. The anode supply source 70 is connected to the inlet of the anode flow path 150 of the electrolysis cell 100 via, for example, a pipe. The anode supply source 70 is provided inside or outside the state diagnosis system or the electrolysis system 1.

The electrolysis cell 100 may be connected to a power supply 50. The power supply 50 can supply a current or a voltage to the electrolysis cell 100, for example. The power supply 50 may supply an alternating voltage and a direct-current voltage. A power supply supplying a direct-current component or an alternating-current component may be housed in the power supply 50. Further, the power supply 50 may be two individual power supplies, one supplying the alternating-current component and the other supplying the direct-current component. The power supply 50 is electrically connected to the cathode current collector 16, for example, via a wire. The plurality of cathode current collectors 16 may be electrically connected in parallel connection with one another. The power supply 50 is electrically connected to the anode current collector 17, for example, via a wire. The plurality of anode current collectors 17 may be electrically connected in parallel connection with one another. The power supply 50 is provided inside or outside the state diagnosis system or electrolysis system 1.

An example of the power supply 50 is not limited to a normal system power supply or battery, but may include a power supply which supplies power generated with renewable energy of a solar cell, wind power generation, or the like. The use of the renewable energy is preferable in terms of environment in addition to the valid utilization of the reducible material. The power supply 50 may further have a power controller that adjusts an output of the aforementioned power supply 50 to control the voltage between the cathode 11 and the anode 12. Note that the power supply 50 may be provided outside the electrolysis device 10. The power supply 50 controls the current or voltage to be supplied to the electrolysis cell 100 and thereby can realize an optimum operation of the electrolysis cell 100 and enhance the reaction efficiency of the reduction reaction of the reducible material at the cathode 11. Further, the power supply 50 adjusts the current or voltage to be supplied to each electrolysis cell 100 and thereby can realize an optimum operation of the electrolysis cell 100 and enhance the reaction efficiency of the reduction reaction of the reducible material at the cathode 11. Between the power supply 50 and the electrolysis cell 100 or the electrolysis cell structure 101, an element for monitoring the current, for example, a resistor element may be provided. This can control the voltage to realize the optimum operation of the electrolysis cell 100 and enhance the reaction efficiency of the reduction reaction at the cathode 11.

Next, an operation method example of the electrolysis device 10 will be described. Here, the case of producing carbon monoxide as the carbon compound will be mainly described, but the reduction product of carbon dioxide is not limited to the carbon compound.

First, a reaction process in the case of oxidizing mainly water (H₂O) to produce hydrogen ions (H⁺) will be described. When the cathode fluid is supplied from the cathode supply source 60 to the cathode flow path 140, the anode fluid is supplied from the anode supply source 70 to the anode flow path 150, and a current is supplied between the cathode 11 and the anode 12 from the power supply 50, an oxidation reaction of water (H₂O) occurs at the anode 12 in contact with the anode solution. Specifically, H₂O contained in the anode solution is oxidized to produce oxygen (O₂) and hydrogen ions (H⁺) as expressed in Formula (1) below.

2H₂O → 4H⁺ + O₂ + 4e⁻ ... (1)

H⁺ produced at the anode 12 moves through the electrolytic solution existing in the anode flow path 150 and the separator 13 and reaches the vicinity of the cathode 11. Electrons (e⁻) based on the current supplied from the power supply 50 to the cathode 11 and H⁺ having moved to the vicinity of the cathode 11 cause a reduction reaction of carbon dioxide. Specifically, carbon dioxide supplied from the cathode flow path 140 to the cathode 11 is reduced to produce carbon monoxide as expressed by Formula (2) below. Further, hydrogen ions receive electrons to produce hydrogen as in Formula (3) below. In this event, hydrogen may be produced at the same time as carbon monoxide.

CO₂ + 2H⁺+ 2e⁻ → CO + H₂O ... (2)

2H⁺ + 2e⁻ → H₂ ... (3)

Next, a reaction process in the case of reducing mainly carbon dioxide (CO₂) to produce hydroxide ions (OH⁻) will be described. When a current is supplied between the cathode 11 and the anode 12 from the power supply, water (H₂O) and carbon dioxide (CO₂) are reduced to produce carbon monoxide (CO) and hydroxide ions (OH⁻) in the vicinity of the cathode 11 as expressed by Formula (4) below. Further, water receives electrons as in Formula (5) below to produce hydrogen. In this event, hydrogen may be produced at the same time as carbon monoxide. The hydroxide ions (OH⁻) produced by the reactions diffuse in the vicinity of the anode 12, whereby the hydroxide ions (OH⁻) are oxidized to produce oxygen (O₂) as expressed in Formula (6) below.

2CO₂ + 2H₂O + 4e⁻ → 2CO + 4OH⁻ ... (4)

2H₂O + 2e⁻ → H₂ + 2OH⁻ ... (5)

4OH⁻ → 2H₂O + O₂ + 4e⁻ ... (6)

As above, the electrolysis cell 100 is not specialized only for the reduction of carbon dioxide, but can produce, for example, carbon monoxide and hydrogen at 1:2 and also manufacture a reduction product and hydrogen at an arbitrary ratio such as manufacturing methanol by a chemical reaction thereafter.

Since hydrogen is a raw material inexpensive and easily available from electrolysis of water or a fossil fuel, a percentage of hydrogen does not need to be large. From those viewpoints, a percentage of carbon monoxide to hydrogen is preferable to be at least 1 or more, and more preferably 1.5 or more in terms of economy and environment.

Next, a reaction process in the case of reducing mainly oxygen (O₂) to produce water (H₂O) will be described. When a current is supplied between the cathode 11 and the anode 12 from the power supply, oxygen (O₂) is reduced to produce water (H₂O) in the vicinity of the cathode 11 as expressed in Formula (7) below. In this event, water may be produced at the same time as carbon monoxide and hydrogen, but it is considered that reduction of oxygen mainly proceeds because of the difference in reduction potential. Water in the electrolytic solution is oxidized to produce oxygen (O₂) and protons (H⁺) as expressed in Formula (8) below, and protons (H⁺) required for the reaction in Formula (7) below diffuse from the vicinity of the anode 12. Further, hydrogen peroxide (H₂O₂) may be produced as an intermediate product or a product. Note that conceivable oxygen reduction reactions are two-electron reduction and four-electron reduction, and can occur in any of acidic and alkaline environments.

O₂ + 4H⁺ + 4e⁻ → 2H₂O ... (7)

2H₂O → O₂ + 4H⁺ + 4e⁻ ... (8)

The electrolysis cell 100 is not specialized only for the reduction of carbon dioxide, but if impurity gases of oxygen and nitrogen are mixed, for example, the electrolysis cell 100 can also reduce them.

In the case of a nitrogen electrolysis device, the cathode 11 can reduce nitrogen to produce ammonia. For the other configuration of the nitrogen electrolysis device, the configuration of the electrolysis device 10 can be appropriately used.

The impedance measuring device 21 measures a complex impedance of the electrolysis cell 100 in the electrolysis device 10. The complex impedance is measured, for example, before start of the operation or after start of the operation of the electrolysis device 10. The impedance measuring device 21 supplies at least one of the current and the voltage between the cathode 11 and the anode 12 of the electrolysis cell 100 while modulating it, for example, and thereby can obtain data (impedance data) indicating the complex impedance from at least one value of the modulated current and the modulated voltage and at least one value of a voltage response or a current response of the electrolysis cell 100 or the electrolysis cell structure 101. Note that modulating means changing a value of a target temporally and includes the case of changing the value of the target periodically. The impedance measuring device 21 may obtain the impedance data by supplying at least one of an alternating current and an alternating voltage between the cathode 11 and the anode 12 of the electrolysis cell 100, for example. A measurement result of the complex impedance may include at least one signal or a plurality of signals selected from the group consisting of a direct current, a sine wave, a rectangular wave, a triangular wave, a pulse, and a noise. The complex impedances may be measured at a plurality of clock times respectively in a predetermined period during the operation of the electrolysis device 10, for example. A measurement frequency of the complex impedance is, for example, within a range of 0 kHz or higher and 1 GHz or lower.

In the case of performing impedance measuring during the operation of the electrolysis device 10, the voltage/current from the power supply 50 and the voltage/current from the impedance measuring device 20 may be superposed and supplied between the cathode 11 and the anode 12. In this case, the current/voltage may be measured by a different measuring terminal connected to the cathode 11 and the anode 12 as well as the impedance measuring device 21, the alternating-current component being retrieved and division to the input voltage/current being done, to thereby obtain the value of the complex impedance. Alternatively, the power supply 50 may supply a voltage/current obtained by superposing a direct-current voltage/current component for electrolysis and an alternating voltage/current component for impedance measurement between the cathode 11 and the anode 12. In this case, setting information such as a frequency or an amplitude of the alternating-current component is sent from the impedance measuring device 21 to the power supply 50 as a signal. In this case, the current/voltage may be measured by a different measuring terminal connected to the cathode 11 and the anode 12 as well as the impedance measuring device 21, the alternating-current component being retrieved, and division to the input voltage/current being done, to thereby obtain the value of the complex impedance.

The impedance measuring device 21 is provided independently of the power supply 50. The impedance measuring device 21 is connected in parallel or in series to the power supply 50. The impedance measuring device 21 may be electrically connected to a connection between the electrolysis device 10 and the power supply 50. Even if the impedance measuring device 21 is not connected to the connection between the electrolysis device 10 and the power supply 50, a measurement result of the complex impedance can be also obtained by utilization of an effect of an induced electromotive force by electromagnetic induction or the like.

The measurement result of the complex impedance may include a scalar value. The measurement result of the complex impedance may include a vector value made of a real part and an imaginary part of a modulation frequency and the impedance.

The impedance data is output from the impedance measuring device 21 and input to the processing unit 31. The impedance measuring device 21 may be connected to the processing unit 31 by cable connection or by wireless connection.

The ammeter 22 is housed, for example, in the power supply 50 and outputs an actual supply current value in relation to a set constant current value. The ammeter 22 may be provided somewhere in a wire connecting the electrolysis device 10 and the power supply 50, for example. The ammeter 22 can measure a current flowing through the electrolysis device 10. The ammeter 2 may be provided in the measuring unit 23.

The processing unit 31 analyzes the impedance data, judges validity of an analysis result, and outputs data (analysis data) indicating the analysis result in which data of at least a part of frequency regions of the measurement result is determined valid. The analysis data is output from the processing unit 31 and input to the processing unit 32.

The memory unit 41 stores data of at least one prior information. The memory unit 41 is constituted, for example, by a memory device which includes a database. It is preferable that the data stored in the memory unit 41 cannot be rewritten.

The prior information includes data indicating a relation between state information of the electrolysis device 10 and a state diagnosis result of the electrolysis device 10 which is obtained before start of the operation of the electrolysis device 10. The state diagnosis result includes a deterioration diagnosis result. The deterioration diagnosis result indicates a deterioration cause at each clock time in the electrolysis device 10 during the operation. The state information includes, for example, impedance information, data of operation information and information of time variation such as time differentiation thereof, and so on.

The impedance information includes information indicating an analysis result of the measurement result of the complex impedance and information indicating analysis validity of the measurement result of the complex impedance. The information indicating the analysis validity includes, for example, information of a judgment result of whether the analysis result at each clock time during the operation of the electrolysis device 10 is valid or invalid, information of each duration of a valid state and an invalid state, information of a residual obtained by fitting using a later-described Lin-KK Test, and so on.

The operation information includes at least one parameter indicating an operation state of the electrolysis device 10. The operation information can be obtained by the measuring unit 23. The measuring unit 23 may have at least one detector capable of measuring a parameter regarding the electrolysis device 10, which is a parameter different from a parameter measured by the impedance measuring device 21 or the ammeter 22.

Examples of the parameter measurable by the at least one detector include a cell voltage of the electrolysis device 10, a cell temperature of the electrolysis device 10, a temperature of the cathode fluid, a temperature of the anode fluid, a temperature of the cathode fluid flowing through the inlet of the cathode flow path 140, a temperature of the cathode fluid flowing through the outlet of the cathode flow path 140, a temperature of the anode fluid flowing through the inlet of the anode flow path 150, a temperature of the anode fluid flowing through the outlet of the anode flow path 150, a flow rate of the cathode fluid, a flow rate of the anode fluid, a composition of the cathode fluid, a composition of the anode fluid, a Faraday efficiency of the oxidation product, a Faraday efficiency of the reduction product, a concentration of an electrolyte contained in the anode fluid, a pressure of the cathode flow path 140, a pressure of the anode flow path 150, an inlet pressure of the cathode flow path, an outlet pressure of the anode flow path 140, an inlet pressure of the anode flow path 150, an outlet pressure of the anode flow path 150, a dew point of the cathode fluid, a pressure loss of the cathode flow path 140, a pressure loss of the anode flow path 150, an electric potential of the cathode 11, an electric potential of the anode 12, an electric potential of the reference electrode 19, and so on. Data indicating these parameters are output from the measuring unit 23, input to the memory unit 41 and stored.

The processing unit 32 outputs data (state data) indicating state information of the electrolysis device 10 based on at least one first data which includes the analysis data. The state data is output from the processing unit 32 and input to the memory unit 42. The at least one first data may include data (detection data) indicating the measured parameter from at least one detector of the measuring unit 23.

The memory unit 42 stores at least one second data which includes the state data. The memory unit 42 may store at least one data to be output from the processing unit 31 and data to be output from the processing unit 32. The data to be stored in the memory unit 42 is preferably renewed or added while the electrolysis device 10 is operated, for example. The memory unit 42 is constituted by a memory device which includes a database, for example.

The memory unit 41 may store at least one data (prior information data) indicating at least one prior information of an electrolysis device 10 different from the electrolysis device 10 in operation. The at least one prior information of the different electrolysis device 10 is retrieved from the memory unit 41 to the processing unit 33 and used for state diagnosis such as deterioration diagnosis or state prediction such as deterioration prediction of the electrolysis device 10. Thereby, present state diagnosis or future state prediction of the electrolysis device 10 can be performed with high accuracy.

The processing unit 33 retrieves the at least one prior information data from the memory unit 41, retrieves the at least one second data from the memory unit 42, diagnoses a state of the electrolysis device 10 based on multiple data including the at least one prior information data from the memory unit 41 and the at least one second data from the memory unit 42, and outputs data (diagnosis data) indicating a diagnosis result. The diagnosis result includes, for example, a deterioration diagnosis result of the electrolysis device 10.

The processing unit 31, the processing unit 32, and the processing unit 33 may be constituted by using hardware using a processor or the like, for example. Note that each operation may be stored as an operation program in a computer-readable recording medium such as a memory and each operation may be performed by appropriately retrieving the operation program stored in the recording medium by the hardware.

The processing unit 31, the processing unit 32, and the processing unit 33 may include a personal computer, a server, an edge device, and so on, which are properly selected depending on an installation location or the like of the electrolysis device 10. Each processing unit can preferably communicate in a form based on a communication protocol of a Universal Serial Bus (USB) cable, a Local Area Network (LAN) cable, or the like.

The processing unit 31, the processing unit 32, and the processing unit 33 may be integrally constituted by one processor, or be constituted separately by a plurality of different processors. A series of processings may be processed by one processor, or be processed by the plurality of different processors.

As described above, the state diagnosis system and the electrolysis system of the first arrangement can diagnose the state of the electrolysis device 10 based on the measurement result of the complex impedance at each clock time and the operation information of the electrolysis device 10. In this event, referring to the prior information stored in the memory unit 41 enables highly accurate diagnosis of the state of the electrolysis device 10. Further, referring to the state information of the electrolysis device which is stored in the memory unit 42 enables further highly accurate diagnosis of the state of the electrolysis device 10. Thereby, for example, the deterioration state of the electrolysis device 10 can be diagnosed.

Here, an example of an analysis processing of a complex impedance using fitting using a Lin-KK Test will be described. As described above, the electrolysis system and the state diagnosis system of the first arrangement determines, by the processing unit 31, the analysis validity and an analysis valid range of the measurement result of the complex impedance, distinguishes a valid region from an invalid region of the analysis result within the range judged valid, and if the analysis is valid, the analysis data within the analysis valid range can be output to the processing unit 32.

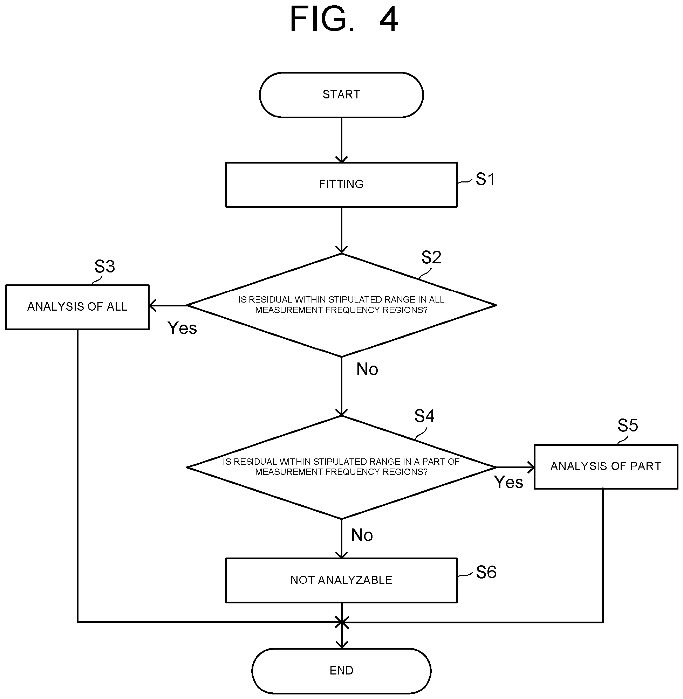

FIG. 4 is a flowchart illustrating an example of the analysis processing by the processing unit 31. The processing unit 31 performs fitting using the Lin-KK Test on the impedance data from the impedance measuring device 21 (S1). The measurement result of the complex impedance can be determined valid in view of analyzability if the measurement result satisfies linearity, time-invariancy, and a causal relation to a modulation signal. This validity can be determined, for example, by a fitting processing between a complex impedance spectrum which depends on a modulation frequency and an equivalent circuit model.

The equivalent circuit model is a model for fitting the complex impedance spectrum, and is an equivalent circuit model composed of an ohmic resistance Rohm and a number M pieces of RC elements (M is a natural number). Rohm and a resistance component Rk of the M pieces of RC components are free parameters of fitting. A real part and an imaginary part of the complex impedance of the equivalent circuit model are certified to satisfy a Kramers-Kronig relation, and therefore, a response signal to the modulation signal of the equivalent circuit model can be said to satisfy the linearity, the time-invariancy, and the causal relation.

By performing a fitting between the complex impedance spectrum obtained by measuring the complex impedance of the electrolysis device 10 and the complex impedance spectrum of the corresponding appropriate equivalent circuit model, a residual being a figure of merit of fitting can be obtained. This is what is called a Lin-KK Test. Note that as a validity evaluation method of a measurement result of a complex impedance other than the Lin-KK Test, it is possible to evaluate validity by judging how far the real part and the imaginary part of the complex impedance satisfy the Kramers-Kronig relation.

Since this residual is calculated in relation to a value of the complex impedance in each frequency component, it is possible to quantitatively evaluate the validity of the measurement result of the complex impedance in each frequency component.

The smaller the residual is, the more valid the measurement result of the complex impedance is. In the measurement result which can be determined valid, the residual is preferable to be within ±5%. Further, it is more preferable that the residual is within ±3%.

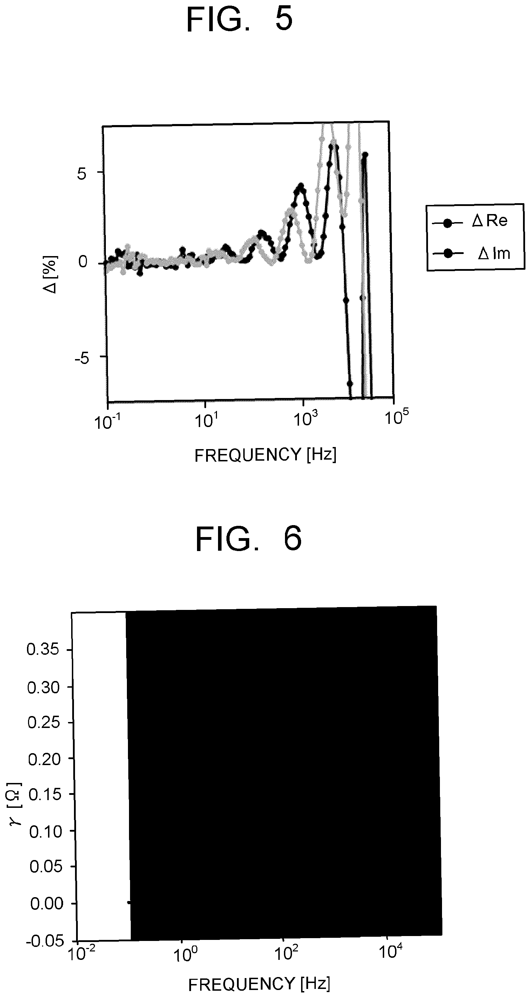

FIG. 5 illustrates an example of the measurement result of the complex impedance of the electrolysis device 10. FIG. 5 is a graph indicating a frequency characteristic of each of a real part Re and an imaginary part Im of the complex impedance. A horizontal axis of the graph indicates a frequency [Hz] of a response signal. A vertical axis of the graph indicates a residual Δ [%] of the Lin-KK test.

The electrolysis device 10 which shows the complex impedance illustrated in FIG. 5 is fabricated as below. The cathode 11 is formed using a stack obtained by applying a catalyst layer on a carbon base material constituted by a gas diffusion layer on which a microporous layer is stacked. The anode 12 is formed using a conductive corrosion-resistant nonwoven fabric such as of Ti which has coating of a catalyst such as iridium oxide (IrOx). The separator 13 is formed using a porous membrane. The cathode flow path plate 14 is formed using a Ti plate which has a flow path pattern on its surface. The anode flow path plate 15 is formed using a Ti plate which has a flow path pattern on its surface. The cathode current collector 16 is formed using a Ti plate on which gold is plated. The anode current collector 17 is formed using a Ti plate on which gold is plated.

The electrolysis cell 100 is formed by stacking the cathode current collector 16, the cathode flow path plate 14, the cathode 11, the separator 13, the anode 12, the anode flow path plate 15, and the anode current collector 17 in order. Further, the electrolysis cells 100 are stacked with the insulating layer 18 and the reference electrode 19 sandwiched therebetween, to thereby form the cell stack. The number of stacks of the electrolysis cell 100 is two or more, and may be several hundreds. The cell stack is sandwiched between the support plates and further fastened with the bolt.

The electrolysis device 10 supplies a carbon dioxide gas from the cathode supply source 60 to the cathode flow path 140 at a flow rate of 33.5 sccm, introduces an aqueous potassium hydroxide solution (1M KOH in concentration) from the anode supply source 70 to the anode flow path 150 at a flow rate of 5 mL/min, and supplies a current from the power supply 50 between the cathode 11 and the anode 12 at a current density of 400 mA/cm², to thereby be operated.

The complex impedance illustrated in FIG. 5 is measured, for example, under a measurement condition below. The impedance measuring device 21 is VSP of Bio-Logic Science Instruments. A frequency range of a superposed alternating current being a single sine wave is from 0.01 Hz to 1 MHz, and its peak-to-peak amplitude is from 5% to 40% in relation to an impressed current. A measurement mode is a Galvano Electrochemical Impedance Spectroscopy mode. Note that it is assumed that even if measurement is not performed under a condition completely the same as the above measurement condition, almost the same result as an effect described here can be obtained. The reference electrode 19 is arranged between the plurality of electrolysis cell 100, and impedances between the cathode 11, the anode 12, and the reference electrode 19 are measured simultaneously. Note that similar results are obtained in complex impedance measurement results between any electrodes.

A graph of the result of the Lin-KK Test on the complex impedance measurement result illustrated in FIG. 5 is illustrated in FIG. 6. A horizontal axis of the graph of FIG. 6 indicates a frequency [Hz]. A vertical axis of the graph of FIG. 6 indicates γ [Q]. As illustrated in FIG. 5, if the frequency is about 1000 Hz or lower, the residual is within ±5%. Further, if the frequency is about 500 Hz or lower, the residual is within ±3%. In FIG. 5, both the residual of the real part of the impedance spectrum and the residual of the imaginary part of the impedance spectrum are illustrated, but either one of the real part and the imaginary part or values of the both may be used as an evaluation criterion.

In the case where the residual is larger than ±5%, the residual shows a tendency of rising steeply, and in the case where the residual is within ±5%, the residual does not show such steep rise. Further, when the residual is within ±3%, an amplitude of the residual is suppressed to be smaller. Note that since a noise or the like in measurement is basically inevitable, the residual is never 0% except the case of a theoretical equivalent circuit model which does not include a noise. Thus, in the case where the residual is 0%, the measurement result is considered to be a result of measurement in which a measurement target is not measured correctly due to an error or the like in measurement. Therefore, when the residual is 0.001% or more or -0.001% or less, as a lower limit, a possibility of such a measurement error can be eliminated, and the measurement result can be regarded as a valid complex impedance measurement result which does not include a measurement error. However, there is a possibility that a residual smaller than ±0.001% is obtained in several data points within a sweep frequency range, and therefore, the data point of small residual of over 0% and less than 0.001% or -0.001% or more and less than 0% can be regarded as not invalid, if the residual is 0.001% or more or -0.001% or less in a certain frequency range (for example, width of 10 Hz).

A result of the case where a characteristic frequency component is retrieved by a Distribution of Relaxation Times (DRT) analysis in all the frequency regions is illustrated in FIG. 6. FIG. 6 illustrates an analysis result by a Gaussian Process-Distribution of Relaxation Times (GP-DRT) being one of the DRT analysis methods. In the case of data illustrated in FIG. 6, as indicated by a gray region of FIG. 6, dispersion is large and a polarization resistance component cannot be extracted. Therefore, analysis of a valid complex impedance measurement result cannot be obtained by this data. The signal γ indicates a partial resistance value of each peak component which is obtained by GP-DRT.

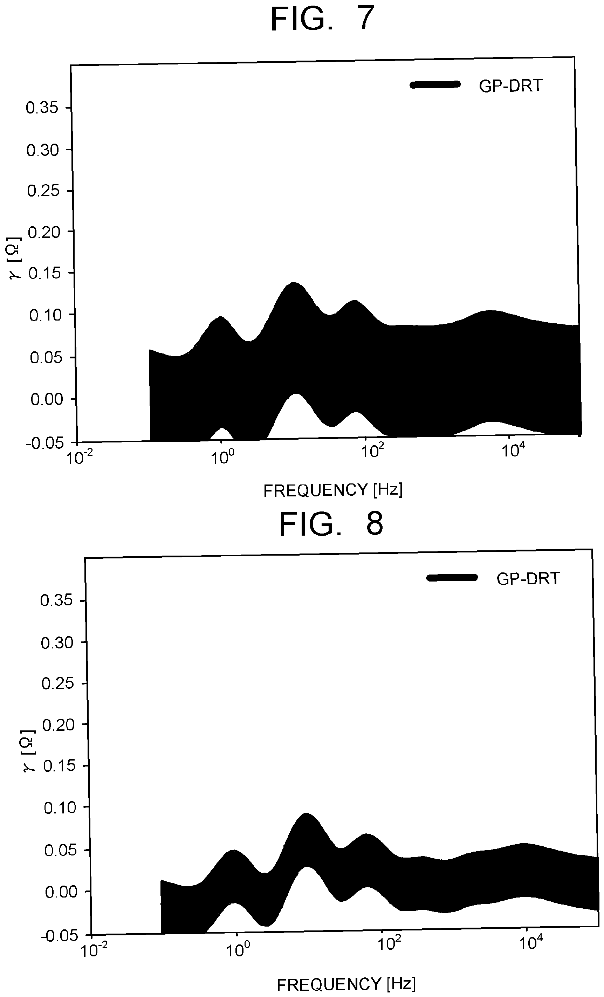

Next, an example of a result of the case where a spectrum of the frequency region (1000 Hz or lower) in which the residual is within ±5% is extracted and subjected to GP-DRT analysis is illustrated in FIG. 7. As indicated by a gray region of FIG. 7, dispersion becomes drastically small and a spectrum region in which a polarization resistance component is extractable can be extracted. Further, an example of a result of the case where a spectrum of the frequency region (500 Hz or lower) in which the residual is within ±3% is extracted and subjected to GP-DRT analysis is illustrated in FIG. 8. As indicated by a gray region of FIG. 8, it is found that dispersion becomes drastically small and a spectrum region in which a polarization resistance component is extractable can be extracted.

As illustrated in FIG. 4, in the case where the residual is within a stipulated range in all the measurement frequency regions (S2: Yes), measurement results of all the frequency regions are analyzed without change (S3). In the case where the residual is not within the stipulated range in all the measurement frequency regions (S2: No) and further the residual is within the stipulated range in a part of the measurement frequency regions (S4: Yes), only the measurement result of the frequency region in which the residual is within the stipulated range is analyzed as valid data (S5). Further, in the case where the residual is not within the stipulated range and is out of the stipulated range in all the measurement frequency regions (S4: No), the measurement result cannot be analyzed (not analyzable), but such a case is recognized as a state where the residual is large, and a clock time when the residual occurred is recorded. Further, the complex impedance is measured at a plurality of clock times thereafter, and if the state where the residual is large continues, it is judged that a deterioration state of some kind is in progress in the electrolysis device 10, and data indicating a diagnosis result showing an abnormality is output from the processing unit 31 (S6). The data indicating the diagnosis result showing the abnormality may be input, for example, to a processing unit in a later stage such as an after-mentioned processing unit 35, and used for controlling an operation condition of the electrolysis device 10. Examples of the operation condition include a current value or the like supplied to the electrolysis device 10.

By the analysis processing, the processing unit 31 may analyze, if the analysis is valid, a clock time when the analysis was valid, a duration of a valid state, and a digitized degree of validness, and if the analysis is invalid, a clock time when the analysis was invalid, a duration of an invalid state, and a digitized degree of invalidity. Thereby, it is possible to distinguish the valid region from the invalid region in the measurement result of the complex impedance.

The processing unit 32 can output the data indicating the state information based on the at least one first data which includes the analysis data by fitting from the processing unit 31.

As described above, by performing fitting using the Lin-KK Test on the measurement result of the complex impedance in the processing unit 31, it is possible to diagnose the state of the electrolysis device 10 with high accuracy.

In the deterioration diagnosis and deterioration prediction, it is necessary to verify the validity of the measurement result of the complex impedance of the electrolysis device 10, but in general, a measurement result of a complex impedance is not determined valid unless in a steady state, and thus, depending on a deterioration mode of the electrolysis device 10, there is a possibility that the electrolysis device 10 is in an unsteady state where the deterioration state of the electrolysis device 10 has notably progressed, making it difficult to obtain a valid measurement result of the complex impedance.

Further, in a common analysis processing of a measurement result of complex impedance, even in the case where there is a valid region in a part of a measurement frequency region, if the other regions are invalid regions, the measurement results are determined to be invalid data, so that the data is not used for diagnosing a state of the electrolysis device 10. Therefore, in the case where a deterioration state has progressed, it is difficult to obtain a valid complex impedance measurement result, and further, it is difficult to diagnose a deterioration state minutely.

Further, when an invalid complex impedance measurement result is obtained, information indicating this measurement result is not saved or utilized. Therefore, in the case where the deterioration state of the electrolysis device 10 is progressing or the like, information indicating continuation of the deterioration state is not utilized, and it is difficult to make deterioration prediction.

Further, in the case where the state of the electrolysis 10 is diagnosed during a rest condition of the operation of the electrolysis device 10, history information regarding deterioration is unlikely to remain, so that information for diagnosing the state of the electrolysis device 10 is insufficient, and it is difficult to enhance diagnosis accuracy.

In contrast, the state diagnosis system and the electrolysis system of the first arrangement analyze the measurement result of the complex impedance and can diagnose the state of the electrolysis device 10, even if a part of the measurement frequency is the invalid region, by using the analysis result of the measurement result of the valid region if the valid region exists in another part of the measurement frequency. Therefore, highly accurate diagnosis of the state of the electrolysis device 10 is possible.

An example of deterioration diagnosis of a carbon dioxide electrolysis cell described is performed based on a complex impedance measurement result and information of a cell which is obtained in advance. Though validity evaluation of the complex impedance measurement result is performed, it is evaluation of only a root mean square error of residuals added up within a measurement frequency range. Therefore, even if a frequency region of high residual exists, it is averaged by a frequency region of low residual, resulting in that the residual is estimated to be low. Thus, validity evaluation of the complex impedance measurement result is not performed with accuracy as high as that of the first arrangement. Further, in Non-Patent Document 1, since the cell state is evaluated by only the root mean square error of residuals added up within the measurement frequency range, a valid range of the measurement frequency region is not verified, and thus deterioration diagnosis accuracy is low also from this view point, and it is considered that the deterioration diagnosis indicates only a tendency of a cell performance.

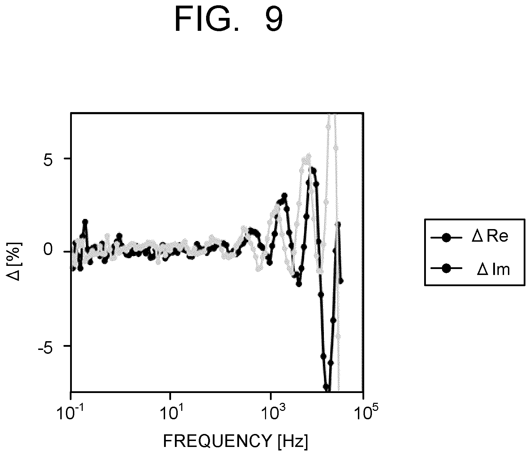

In the measurement result of the complex impedance illustrated in FIG. 5, the residual is large since the electrolysis device 10 is operated with a high current density (400 mA/cm²). In contrast, when the electrolysis device 10 is operated under a similar condition to the measurement condition of the measurement result of the complex impedance which is illustrated in FIG. 5 except that a current density is set to 100 mA/cm², a residual can be made small as illustrated in FIG. 9. FIG. 9 is a view illustrating another example of the complex impedance measurement result of the electrolysis device 10. Thus, by changing a value of a parameter included in operation information of the electrolysis device 10 based on the residual, improvement of the residual is recognized and thereby the operation of the cell can be switched to that of a steady state.

### (Second Arrangement)

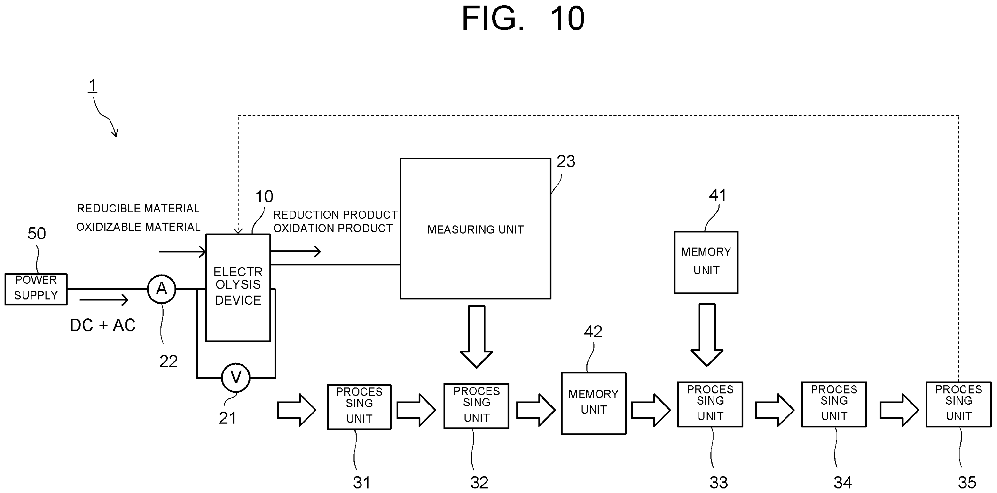

FIG. 10 is a schematic view illustrating an example configuration of a state diagnosis system and an electrolysis system of a second arrangement. The electrolysis system and the state diagnosis system of the second arrangement are different from the electrolysis system and the state diagnosis system of the first arrangement in that those of the second arrangement further have a processing unit 34 and a processing unit 35. Hereinafter, parts in the second arrangement which are different from the first arrangement will be described and explanation of the first arrangement can be appropriately used for the other parts.

The processing unit 34 predicts a future state of an electrolysis device 10 based on at least one third data which includes the diagnosis data from a processing unit 33 to produce data (prediction data) indicating a prediction result. The prediction result includes a state diagnosis result after elapsing of a predetermined time period of the electrolysis device 10 in operation. The prediction data is output from the processing unit 34 and input to the processing unit 35.

The processing unit 35 produces at least one control signal based on the prediction data from the processing unit 34. The at least one control signal is output from the processing unit 35 and input to the electrolysis device 10. The at least one control signal is a signal for controlling an operation state of the electrolysis device 10. Examples of the at least one control signal include parameter values necessary for controlling the electrolysis device 10 such as, for example, a control signal for adjusting a current density of a current supplied to the electrolysis device 10, a control signal for adjusting a temperature of the electrolysis device 10, a control signal adjusting a flow rate of a cathode fluid supplied to a cathode flow path 140, and so on. The at least one control signal is not limited to the above and may include a control signal for adjusting at least one parameter detectable by a measuring unit 23.

The processing unit 34 and the processing unit 35 may be constituted by using hardware using a processor or the like, for example. Note that each action may be stored as an action program in a computer readable storage medium such as a memory, and each action may be performed by appropriately retrieving the action program stored in the storage medium by the hardware.

The processing unit 34 and the processing unit 35 include a personal computer, a server, an edge device, and so on, which may be properly selected depending on an installation location or the like of the electrolysis device 10. Each processing unit can preferably communicate in a form based on a communication protocol of a USB cable, a LAN cable, or the like.

The processing unit 34 and the processing unit 35 may be constituted integrally with a processing unit 31, a processing unit 32, and the processing unit 33 by one processor or may be constituted separately by a plurality of different processors. A series of processings may be processed by one processor, or may be processed by the plurality of different processors.

As described above, in the second arrangement, the future state of the electrolysis device 10 is predicted with reference to information indicating a present state of the electrolysis device 10. Thereby, for example, deterioration of the electrolysis device 10 can be predicted with high accuracy, and by grasping progression of deterioration of the electrolysis device 10 in advance and adjusting each kind of operation condition of the electrolysis device 10 before deterioration progresses, it is possible to suppress future deterioration of the electrolysis device 10.

Examples of the at least one control signal may include a control signal for adjusting a flow rate of a cathode fluid supplied to a cathode flow path 140, a control signal for adjusting an anode fluid supplied to an anode flow path 150, a control signal for adjusting cooling liquid for cooling the electrolysis device 10, a control signal for controlling a pressure of each flow path of the electrolysis device 10, and a control signal for adjusting a concentration of an electrolyte contained in the anode fluid. By supplying these control signals from the processing unit 35 to the electrolysis device 10 to adjust (modulate) each parameter, it is possible to lock in a small change, to thereby further enhance accuracy of deterioration diagnosis or deterioration prediction of the electrolysis device 10.

Further, data (simulation data) indicating an operation simulation result of the electrolysis device 10 may be stored in a memory unit 41 as the prior information data. This can further enhance accuracy of the deterioration diagnosis or the deterioration prediction of the electrolysis device 10.

Further, a deterioration diagnosis result or a deterioration prediction result indicates a present or future deterioration cause of the electrolysis device 10. Examples of the deterioration cause include deterioration of a separator 13, deterioration of a cathode catalyst provided on a cathode 11, deterioration of an anode catalyst provided on an anode 12, occurrence of flooding due to an operation of the electrolysis device 10, precipitation of salt due to the operation of the electrolysis device 10, fastening failure of an electrolysis cell 100, an electrical short circuit of the electrolysis cell 100, and so on. The second arrangement enables detailed deterioration diagnosis and deterioration prediction of the electrolysis device 10 against the above deterioration cause.

The processing unit 34 may perform analysis by a time-series machine learning model, using the at least one third data. This enables further accurate deterioration diagnosis and deterioration prediction of the electrolysis device 10.

The second arrangement can be appropriately combined with the first arrangement.

### (Third Arrangement)

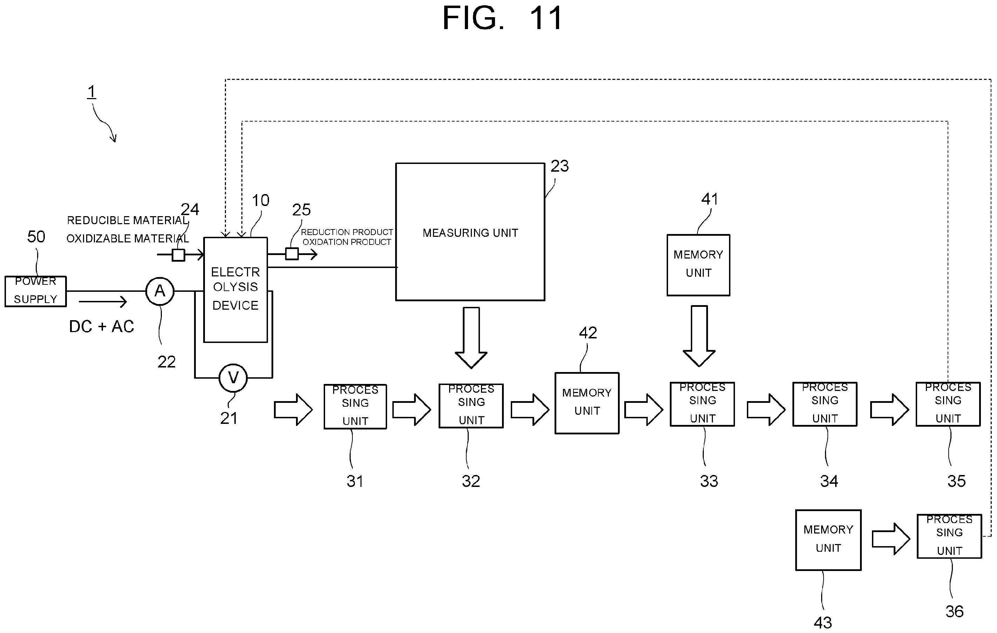

FIG. 11 is a schematic view illustrating an example configuration of a state diagnosis system and an electrolysis system of a third arrangement. The electrolysis system of the third arrangement is different from the electrolysis system of the second arrangement in that the electrolysis system of the third arrangement further has a sensor 24, a sensor 25, a memory unit 43, and a processing unit 36. Hereinafter, parts in the third arrangement which are different from the second arrangement will be described and explanation of the second arrangement can be appropriately used for the other parts.

The sensor 24, by detecting a composition of a fluid introduced to an electrolysis device 10, for example, can perform real-time analysis and monitoring of the fluid. Examples of the sensor 24 include a Micro Electro Mechanical Systems (MEMS) sensor, a gas chromatograph device, and so on. An electrolysis system 1 may have a plurality of sensors 24. One of the plurality of sensors 24 is provided somewhere in a flow path connecting a cathode supply source 60 and an inlet of a cathode flow path 140 or provided to be connected to the flow path, for example, and can detect a composition of a cathode fluid supplied from the cathode supply source 60 to the cathode flow path 140. Another one of the plurality of sensors 24 is provided somewhere in a flow path connecting an anode supply source 70 and an inlet of an anode flow path 150 or provided to be connected to the flow path, for example, and can detect a composition of the anode fluid supplied from the anode supply source 70 to the anode flow path 150. The sensor 24 may be provided in a measuring unit 23. A detection result of the sensor 24 may vary from time to time.

The sensor 25, by detecting a composition of a fluid discharged from the electrolysis device 10, for example, can perform real-time analysis and monitoring of the fluid. Examples of the sensor 25 include a MEMS sensor, a gas chromatograph device, and so on. The electrolysis system 1 may have a plurality of sensors 25. One of the plurality of sensors 25 can detect a composition of the cathode fluid supplied from the cathode flow path 140. Another one of the plurality of sensors 25 can detect a composition of the anode fluid discharged from the anode flow path 150. The sensor 25 may be provided in the measuring unit 23. A detection result of the sensor 25 may vary from time to time.

The memory unit 43 stores data (external data) indicating at least one external information. Examples of the external data include data (energy data) indicating a demand-supply situation of renewable energy, data (fluid data) indicating a supply possibility of at least one fluid of the cathode fluid and the anode fluid, data (device process data) indicating a state of a later-stage process of the electrolysis device 10, data (market data) indicating market information of a carbon credit, and so on. The memory unit 43 is constituted, for example, by a memory device which includes a database.

The demand-supply situation of the renewable energy is represented, for example, by electric energy produced by the renewable energy or the like.

The supply possibility of the at least one fluid is represented, for example, by the composition or a flow rate of the cathode fluid supplied from the cathode supply source 60, the composition or a flow rate of the anode fluid supplied from the anode supply source 70, or the like. In this case, adjusting electric power supplied to the electrolysis device 10 can enhance a present or future operating efficiency of the electrolysis device 10.

The state of the later-stage process is represented, for example, by a conversion efficiency (reaction rate) of a reduction product in a later-stage device which is connected to the later stage of the electrolysis device 10 and produces a valuable resource such as a chemical compound by a chemical reaction using the reduction product, or the like. Examples of the chemical reaction include a reaction using a Fischer-Tropsch method (FT method), and so on.

The market information of the carbon credit is represented by fluctuation information of compensation for curtailment of carbon dioxide, or the like.

The processing unit 36 makes an operation plan or a maintenance plan of the electrolysis device 10 based on multiple data which include, for example, the analysis data, the diagnosis data, the predction data, data (detection data) indicating detection results of the compositions by the sensor 24 or the sensor 25, and the external data retrieved from the memory unit 43.

In the case where the at least one external information includes the market information of the carbon credit, by feedbacking the operation condition at present to the electrolysis device 10, a profit in a carbon credit market can be increased.

The processing unit 36 can produce at least one control signal which adjusts the operation condition of the electrolysis device 10 based on the operation plan. The produced control signal is output from the processing unit 36 and input to the electrolysis device 10. Thereby, the conversion efficiency of the reduction product can be enhanced in the later-stage device, for example.

The processing unit 36 may be constituted by using hardware using a processor or the like, for example. Note that each action may be stored as an action program in a computer-readable recording medium such as a memory and each action may be performed by appropriately retrieving the action program stored in the recording medium by the hardware.

The processing unit 36 includes a personal computer, a server, an edge device, and so on, which are properly selected depending on an installation location or the like of the electrolysis device 10. The processing unit 36 can preferably communicate in a form based on a communication protocol of a USB cable, a LAN cable, or the like.

The processing unit 36 may be constituted integrally with a processing unit 31, a processing unit 32, a processing unit 33, a processing unit 34, and a processing unit 35, by one processor, or may be constituted separately by a plurality of different processors. A series of processings may be processed by one processor, or may be processed by the plurality of different processors.

The processing unit 36 may make the operation plan of the electrolysis device 10 based on the multiple data to be input, and may output the control signal for controlling allocation of a amount of the cathode fluid to be supplied to each of the electrolysis cells 100 according to the operation plan. By controlling the allocation, a load by the reduction reaction can be dispersed depending on a state of each electrolysis cell 100, and the operation state can be adjusted in a manner to concur with a state of the later-stage process of the electrolysis device 10, for example.

The processing unit 36 may make the maintenance plan of the electrolysis device 10 based on the aforementioned plurality of data having been input and produce a control signal according to the maintenance plan, to feedback the control signal to the electrolysis device 10. Thereby, future deterioration of the electrolysis device 10 can be prevented in advance and the later-stage process can be made most efficient. Further, performing cooperative control of the electrolysis device 10 and the later-stage process can realize an efficient electrolysis system 1.

The operation plan or the maintenance plan is produced automatically, but the operation plan can be changed by an input by a user. Further, the operation plan does not have to be one, and it is also possible to suggest a plurality of operation plans or a plurality of maintenance plans to the user and to select the operation plan or the maintenance plan in accordance with desire of the user.

The memory unit 43 may store data (maintenance data) indicating maintenance plans of electrolysis devices 10 in all over the country or all over the world. Thereby, the processing unit 36 can make, for example, a plan of a route capable of supplying the user a replacement part necessary for the electrolysis device 10 in the shortest time and the shortest distance in accordance with the aforementioned maintenance plan retrieved from the memory unit 43. Thereby, a standby time until the replacement part is supplied can be shortened, so that a maintenance time of the electrolysis device 10 can be shortened.

Further, similarly to the first arrangement, by analyzing the measurement result of the complex impedance of the electrolysis device 10, a state of the inside of the electrolysis device 10 can be grasped, and deterioration diagnosis and deterioration prediction of the electrolysis device 10 can be performed, for example.

If the electrolysis device 10 is in operation, present deterioration diagnosis of the electrolysis device 10 and future deterioration prediction of the electrolysis device 10 can be performed based on an analysis result of the measurement result of the complex impedance.

If the operation of the electrolysis device 10 is halted (in a rest condition), present deterioration diagnosis of the electrolysis device 10 can be performed based on the analysis result of the measurement result of the complex impedance, and thereby a deteriorated member can be specified without decomposition of the electrolysis device 10. Depending on the deteriorated member as well as a degree of the deterioration and a deterioration situation, performing a refreshing operation without decomposing the electrolysis device 10 may be able to bring about performance restoration of the electrolysis device 10, so that a longer operating life of the electrolysis device 10 can be expected. In order for recovery of the electrolysis device 10, even in the case where decomposition thereof is determined necessary, a member to be replaced can be specified and it suffices to replace only that member, and thus efficient reuse and recycle of a cell or a stack can be expected.

Further, by storing data of the at least one external information together with the state information of the electrolysis device 10 in the memory unit 43 and performing deterioration/abnormality/operating life prediction with reference to the information, it is possible to make a maintenance plan of the electrolysis device 10 automatically, for example. Thereby, curtailment of the number of maintenance and improvement of operating rate can be realized.

Note that the configurations of the above-described arrangements are applicable in combination. Further, parts thereof are replaceable. While certain arrangements of the present invention have been described above, these arrangements have been presented by way of example only, and are not intended to limit the scope of the invention. Indeed, the novel arrangements described herein may be embodied in a variety of other forms; furthermore, various omissions, substitutions, and changes in the form of the arrangements described herein may be made without departing from the spirit of the inventions. The accompanying claims and their equivalents are intended to cover such forms or modifications as would fall within the scope and spirit of the inventions.

The above arrangements can be summarized in the following clauses.

### (Clause 1)

A state diagnosis system configured to diagnose a state of an electrolysis device,
the electrolysis device comprising an electrolysis cell, the electrolysis cell having an anode, a cathode, and a separator separating the anode and the cathode,
the state diagnosis system comprising:
   an impedance measuring device configured to measure a complex impedance of the electrolysis device and to output an impedance data indicating a measurement result of the complex impedance;
   a first memory unit configured to store at least one prior information data to be obtained before start of an operation of the electrolysis device, the at least one prior information data including a relation data indicating a relation between state information of the electrolysis device and a diagnosis result of a state of the electrolysis device;
   a first processing unit configured to analyze the impedance data, judge a validity of an analysis result of the impedance data, and output an analysis data indicating the analysis result in which a data indicating at least a part of a frequency region in the measurement result is determined valid;
   a second processing unit configured to output state data indicating the state information based on at least one first data, the at least one first data including the analysis data;
   a second memory unit configured to store at least one second data, the at least one second data including the state data; and
   a third processing unit configured to diagnose the state based on multiple data including the at least one prior information data from the first memory unit and the at least one second data from the second memory unit, and to output a diagnosis data indicating the diagnosis result of the state.

### (Clause 2)

The state diagnosis system according to Clause 1, wherein
the first processing unit is configured to
analyze the impedance data to determine analysis validity and an analysis valid range of the measurement result of the complex impedance and thus distinguish a valid region from an invalid region of the measurement result of the complex impedance, and
output the analysis data indicating the analysis result in the valid region.

### (Clause 3)

The state diagnosis system according to Clause 1, further including
a fourth processing unit configured to predict a future state of the electrolysis device based on at least one third data including the diagnosis data from the third processing unit, and to output a prediction data indicating a prediction result of the future state.

### (Clause 4)

The state diagnosis system according to Clause 3, wherein
the first processing unit is configured to
analyze the impedance data to determine analysis validity and an analysis valid range of the measurement result of the complex impedance and thus distinguish a valid region from an invalid region of the measurement result, and
output the analysis data indicating the analysis result in the valid region.

### (Clause 5)

An electrolysis system including:
the electrolysis device; and
the state diagnosis system according to Clause 3, wherein
the state diagnosis system further comprises
   a fifth processing unit configured to output a control signal for controlling an operation state of the electrolysis device based on the prediction data from the fourth processing unit.

### (Clause 6)

The electrolysis system according to Clause 5, further including:
sensors configured to detect a composition of at least one fluid to be supplied to the electrolysis cell and a composition of at least one fluid to be discharged from the electrolysis cell and to output detection data indicating detection results of the compositions;
a third memory unit configured to store external data indicating at least one external information selected from the group consisting of an energy data indicating a demand-supply situation of renewable energy, a fluid data indicating a supply possibility of the at least one fluid, a device process data indicating a state of a later-stage process of the electrolysis device, and a market data indicating market information of a carbon credit; and
a sixth processing unit configured to make an operation plan of the electrolysis device based on multiple data including the analysis data, the diagnosis data, the prediction data, the detection data, and the external data.

### (Clause 7)

The electrolysis system according to Clause 6, wherein
the electrolysis device comprises the electrolysis cells, and
the sixth processing unit is configured to make the operation plan based on the multiple data and to output a control signal for controlling an allocation of an amount of a cathode fluid to be supplied to each of the electrolysis cells in accordance with the operation plan.

### (Clause 8)

The electrolysis system according to Clause 5, further including:
sensors configured to detect a composition of at least one fluid to be supplied to the electrolysis device and a composition of at least one fluid to be discharged from the electrolysis cell and to output a detection data indicating detection results of the compositions;
a third memory unit configured to store an external data indicating at least one external information selected from the group consisting of an energy data indicating a demand-supply situation of renewable energy, a fluid data indicating a supply possibility of the at least one fluid, a device process data indicating a state of a later-stage process of the electrolysis device, and a market data indicating market information of a carbon credit; and
a sixth processing unit configured to make a maintenance plan of the electrolysis device based on multiple data including the analysis data, the diagnosis data, the prediction data, the detection data, and the external data.

### (Clause 9)

The electrolysis system according to Clause 8, wherein
the third memory unit is configured to store a maintenance data indicting maintenance plans of electrolysis devices in all over the country or all over the world, and
the sixth processing unit is configured to make a plan of a route capable of supplying a replacement part necessary for the electrolysis device in the shortest time and the shortest distance in accordance with the maintenance data.

### (Clause 10)

The electrolysis system according to any one of Clause 5 to Clause 9, wherein
the measurement result of the complex impedance includes at least one signal selected from the group consisting of a direct current, a sine wave, a rectangular wave, a triangular wave, a pulse, and a noise, and
a measurement frequency of the complex impedance is in a range of 0 kHz or higher and 1 GHz or lower.

### (Clause 11)

The electrolysis system according to any one of Clause 5 to Clause 10, wherein
the first processing unit is configured to perform a fitting processing using an equivalent circuit model on the impedance data and judge that the measurement result of a region in which a value of a calculated residual is within ±5% is a valid region.

### (Clause 12)

The electrolysis system according to Clause 11, wherein
the first processing unit is configured to judge that the measurement result of a region in which the value of the residual is within ±3% is a valid region.

### (Clause 13)

The electrolysis system according to Clause 6 or Clause 8, wherein
the sixth processing unit is configured to output at least one control signal for controlling at least one selected from the group consisting of a flow rate of the at least one fluid to be supplied to the electrolysis device, the composition of the at least one fluid to be supplied to the electrolysis device, a temperature of the electrolysis device, and a pressure of the electrolysis device, in accordance with the operation plan or the maintenance plan.

### (Clause 14)

The electrolysis system according to any one of Clause 5 to Clause 9, wherein
the at least one prior information data further includes
at least one selected from the group consisting of a first operation data indicating operation information of the electrolysis device to be obtained before start of the operation of the electrolysis device, a second operation data indicating operation information of a second electrolysis device different from the electrolysis device, and a simulation data indicating an operation simulation result of the electrolysis device.

### (Clause 15)

The electrolysis system according to Clause 14, wherein
the operation information of the electrolysis device includes at least one parameter selected from the group consisting of a temperature of the electrolysis device, a temperature of a cathode fluid to be supplied to the electrolysis device, a temperature of an anode fluid to be supplied to the electrolysis device, a flow rate of the cathode fluid, a composition of the cathode fluid, a cell pressure of the electrolysis device, a Faraday efficiency of at least one product to be produced by the electrolysis device, a concentration of an electrolyte in the anode fluid, an inlet pressure of a cathode flow path facing the cathode, an inlet pressure of an anode flow path facing the anode, an outlet pressure of the cathode flow path, an outlet pressure of the anode flow path, an electric potential of a reference electrode connected to the impedance measuring device, a dew point of the cathode fluid, a pressure loss of the cathode flow path, a pressure loss of the anode flow path, a temperature of the anode fluid at an inlet of the anode flow path, and a temperature of the anode fluid at an outlet of the anode flow path.

### (Clause 16)

The electrolysis system according to Clause 14, wherein
the state information includes at least one information selected from the group consisting of the operation information, the validity of the analysis, the valid range of the analysis, the analysis result, and information regarding time variation thereof.

### (Clause 17)

The electrolysis system according to any one of Clause 5 to Clause 9, wherein
the diagnosis result indicates a present deterioration cause of the electrolysis device, and
the deterioration cause includes at least one selected from the group consisting of deterioration of the separator, deterioration of a cathode catalyst of the cathode, deterioration of an anode catalyst of the anode, flooding by the operation of the electrolysis device, precipitation of salt by the operation of the electrolysis device, fastening failure of the electrolysis cell, and an electrical short circuit of the electrolysis cell.

### (Clause 18)

The electrolysis system according to any one of Clause 5 to Clause 9, wherein
the diagnosis result indicates a future deterioration cause of the electrolysis device, and
the deterioration cause includes at least one selected from the group consisting of deterioration of the separator, deterioration of a cathode catalyst of the cathode, deterioration of an anode catalyst of the anode, flooding by the operation of the electrolysis device, precipitation of salt by the operation of the electrolysis device, fastening failure of the electrolysis cell, and an electrical short circuit of the electrolysis cell.

### (Clause 19)

The electrolysis system according to any one of Clause 5 to Clause 18, wherein
the electrolysis device further has a reference electrode connected to the impedance measuring device.

### (Clause 20)

The electrolysis system according to any one of Clause 5 to Clause 9, wherein
the fourth processing unit is configured to perform analysis by a time-series machine learning model, using the at least one third data to predict a future state of the electrolysis device and to output the prediction data.

### (Clause 21)

The electrolysis system according to any one of Clause 5 to Clause 20, wherein
the electrolysis device is configured to reduce carbon dioxide to produce a carbon compound or to reduce nitrogen to produce ammonia.

### (Clause 22)

A method of diagnosing a state of an electrolysis device,
the electrolysis device comprising an electrolysis cell, the electrolysis cell having an anode, a cathode, and a separator separating the anode and the cathode,
the method comprising:
   measuring a complex impedance of the electrolysis cell by an impedance measuring device, and output an impedance data indicating a measurement result of the complex impedance from the impedance measuring device;
   analyzing the impedance data by a first processing unit, judging a validity of an analysis result by the first processing unit, and output an analysis data from the first processing unit, the analysis data indicating the analysis result in which data indicating at least a part of a frequency region in the measurement result is determined valid:
      outputting a state data based on at least one first data including the analysis data from a second processing unit, the state data indicating the state information of the electrolysis device; and
      retrieving at least one prior information data from a first memory unit, retrieving at least one second data from a second memory unit, diagnosing the state of the electrolysis device by a third processing unit based on multiple data including the at least one prior information data and the at least one second data, and outputting a diagnosis data indicating a diagnosis result of the state from the third processing unit, the at least one prior information data being obtained before start of an operation of the electrolysis device, the at least one prior information data including a relation data indicating a relation between the state information and the diagnosis result, and the at least one second data including the state data.

## Claims

1. A state diagnosis system configured to diagnose a state of an electrolysis device,
the electrolysis device comprising an electrolysis cell, the electrolysis cell having an anode, a cathode, and a separator separating the anode and the cathode,
the state diagnosis system comprising:
an impedance measuring device configured to measure a complex impedance of the electrolysis device and to output an impedance data indicating a measurement result of the complex impedance;
a first memory unit configured to store at least one prior information data to be obtained before start of an operation of the electrolysis device, the at least one prior information data including a relation data indicating a relation between state information of the electrolysis device and a diagnosis result of a state of the electrolysis device;
a first processing unit configured to analyze the impedance data, judge a validity of an analysis result of the impedance data, and output an analysis data indicating the analysis result in which a data indicating at least a part of a frequency region in the measurement result is determined valid;
a second processing unit configured to output state data indicating the state information based on at least one first data, the at least one first data including the analysis data;
a second memory unit configured to store at least one second data, the at least one second data including the state data; and
a third processing unit configured to diagnose the state based on multiple data including the at least one prior information data from the first memory unit and the at least one second data from the second memory unit, and to output a diagnosis data indicating the diagnosis result of the state.

2. The state diagnosis system according to claim 1, wherein
the first processing unit is configured to
analyze the impedance data to determine analysis validity and an analysis valid range of the measurement result of the complex impedance and thus distinguish a valid region from an invalid region of the measurement result of the complex impedance, and
output the analysis data indicating the analysis result in the valid region.

3. The state diagnosis system according to claim 1, further comprising
a fourth processing unit configured to predict a future state of the electrolysis device based on at least one third data including the diagnosis data from the third processing unit, and to output a prediction data indicating a prediction result of the future state.

4. The state diagnosis system according to claim 3, wherein
the first processing unit is configured to
analyze the impedance data to determine analysis validity and an analysis valid range of the measurement result of the complex impedance and thus distinguish a valid region from an invalid region of the measurement result, and
output the analysis data indicating the analysis result in the valid region.

5. An electrolysis system comprising:
the electrolysis device; and
the state diagnosis system according to claim 3, wherein
the state diagnosis system further comprises
a fifth processing unit configured to output a control signal for controlling an operation state of the electrolysis device based on the prediction data from the fourth processing unit.

6. The electrolysis system according to claim 5, further comprising:
sensors configured to detect a composition of at least one fluid to be supplied to the electrolysis cell and a composition of at least one fluid to be discharged from the electrolysis cell and to output detection data indicating detection results of the compositions;
a third memory unit configured to store external data indicating at least one external information selected from the group consisting of an energy data indicating a demand-supply situation of renewable energy, a fluid data indicating a supply possibility of the at least one fluid, a device process data indicating a state of a later-stage process of the electrolysis device, and a market data indicating market information of a carbon credit; and
a sixth processing unit configured to make an operation plan of the electrolysis device based on multiple data including the analysis data, the diagnosis data, the prediction data, the detection data, and the external data.

7. The electrolysis system according to claim 6, wherein
the electrolysis device comprises the electrolysis cells, and
the sixth processing unit is configured to make the operation plan based on the multiple data and to output a control signal for controlling an allocation of an amount of a cathode fluid to be supplied to each of the electrolysis cells in accordance with the operation plan.

8. The electrolysis system according to claim 5, further comprising:
sensors configured to detect a composition of at least one fluid to be supplied to the electrolysis device and a composition of at least one fluid to be discharged from the electrolysis cell and to output a detection data indicating detection results of the compositions;
a third memory unit configured to store an external data indicating at least one external information selected from the group consisting of an energy data indicating a demand-supply situation of renewable energy, a fluid data indicating a supply possibility of the at least one fluid, a device process data indicating a state of a later-stage process of the electrolysis device, and a market data indicating market information of a carbon credit; and
a sixth processing unit configured to make a maintenance plan of the electrolysis device based on multiple data including the analysis data, the diagnosis data, the prediction data, the detection data, and the external data.

9. The electrolysis system according to claim 8, wherein
the third memory unit is configured to store a maintenance data indicting maintenance plans of electrolysis devices in all over the country or all over the world, and
the sixth processing unit is configured to make a plan of a route capable of supplying a replacement part necessary for the electrolysis device in the shortest time and the shortest distance in accordance with the maintenance data.

10. The electrolysis system according to any one of claim 5 to claim 9, wherein the measurement result of the complex impedance includes at least one signal selected from the group consisting of a direct current, a sine wave, a rectangular wave, a triangular wave, a pulse, and a noise, and
a measurement frequency of the complex impedance is in a range of 0 kHz or higher and 1 GHz or lower.

11. The electrolysis system according to any one of claim 5 to claim 9, wherein the first processing unit is configured to perform a fitting processing using an equivalent circuit model on the impedance data and judge that the measurement result of a region in which a value of a calculated residual is within ±5% is a valid region.

12. The electrolysis system according to claim 11, wherein
the first processing unit is configured to judge that the measurement result of a region in which the value of the residual is within ±3% is a valid region.

13. The electrolysis system according to claim 6 or claim 8, wherein
the sixth processing unit is configured to output at least one control signal for controlling at least one selected from the group consisting of a flow rate of the at least one fluid to be supplied to the electrolysis device, the composition of the at least one fluid to be supplied to the electrolysis device, a temperature of the electrolysis device, and a pressure of the electrolysis device, in accordance with the operation plan or the maintenance plan.

14. The electrolysis system according to any one of claim 5 to claim 9, wherein
the at least one prior information data further includes
at least one selected from the group consisting of a first operation data indicating operation information of the electrolysis device to be obtained before start of the operation of the electrolysis device, a second operation data indicating operation information of a second electrolysis device different from the electrolysis device, and a simulation data indicating an operation simulation result of the electrolysis device.

15. The electrolysis system according to claim 14, wherein
the operation information of the electrolysis device includes at least one parameter selected from the group consisting of a temperature of the electrolysis device, a temperature of a cathode fluid to be supplied to the electrolysis device, a temperature of an anode fluid to be supplied to the electrolysis device, a flow rate of the cathode fluid, a composition of the cathode fluid, a cell pressure of the electrolysis device, a Faraday efficiency of at least one product to be produced by the electrolysis device, a concentration of an electrolyte in the anode fluid, an inlet pressure of a cathode flow path facing the cathode, an inlet pressure of an anode flow path facing the anode, an outlet pressure of the cathode flow path, an outlet pressure of the anode flow path, an electric potential of a reference electrode connected to the impedance measuring device, a dew point of the cathode fluid, a pressure loss of the cathode flow path, a pressure loss of the anode flow path, a temperature of the anode fluid at an inlet of the anode flow path, and a temperature of the anode fluid at an outlet of the anode flow path.
